# EUROPÄISCHE PATENTSCHRIFT

(11) **EP 3 615 903 B1**
(45) Veröffentlichungstag und Bekanntmachung des Hinweises auf die Patenterteilung: **27.12.2023**
(21) Anmeldenummer: 18710893.1
(22) Anmeldetag: 20.03.2018
(51) Int. Cl.: G01K 1/14

(54) **SENSOR ZUR ERFASSUNG EINES RÄUMLICHEN TEMPERATURPROFILS UND VERFAHREN ZUR HERSTELLUNG EINER SENSOREINHEIT**
SENSOR FOR MEASURING A SPATIAL TEMPERATURE PROFILE AND METHOD FOR PRODUCING A SENSOR UNIT
CAPTEUR DE DÉTECTION D'UN PROFIL DE TEMPÉRATURE SPATIAL ET PROCÉDÉ DE FABRICATION D'UNE UNITÉ DE DÉTECTION

(30) Priorität: 25.07.2017 EP 17182978
(43) Veröffentlichungstag der Anmeldung: 04.03.2020
(73) Patentinhaber: Yageo Nexensos GmbH, 63801 Kleinostheim (DE)
(72) Erfinder: WIENAND, Karlheinz, 63741 Aschaffenburg (DE); DIETMANN, Stefan, 63755 Alzenau (DE); BOLDT, Kai-Ulrich, 63450 Hanau (DE); TEUSCH, Dieter, 63486 Bruchköbel (DE); BLEIFUSS, Martin, 63796 Kahl (DE); HELLMANN, Uwe, 63579 Freigericht (DE); MUZIOL, Matthias, 63533 Mainhausen (DE)
(74) Vertreter: Meissner Bolte Partnerschaft mbB
(86) Internationale Anmeldenummer: PCT/EP2018/056961
(87) Internationale Veröffentlichungsnummer: WO 2019/020220

(56) Entgegenhaltungen:
- WO-A1-2012/035494
- CN-A- 1 796 951
- DE-A1-102010 046 992
- DE-T5-112011 104 686
- JP-A- H0 510 826
- US-A1- 2013 209 846
- US-A1- 2015 007 665

## Beschreibung

Die vorliegende Erfindung betrifft eine Sensoreinheit zur Erfassung eines räumlichen Temperaturprofils. Weiterhin betrifft die vorliegende Erfindung ein Verfahren zur Herstellung einer Sensoreinheit.

Im Stand der Technik werden gattungsgemäße Sensoreinheiten zur Temperaturmessung an einzelnen galvanischen Zellen, oder an galvanischen Zellen eines Zellenstapels, wie beispielsweise an Brennstoffzellen, oder an Zellen eines Energiespeichers, beispielsweise einer Batterie, zur Überwachung einer Zellentemperatur verwendet. Schnelle Temperatursteigungen können die chemischen Prozesse in einer Zelle dahingehend beeinflussen, dass zunächst der Wirkungsgrad der Zelle abnimmt. Bei einer länger andauernden Überhitzung der Zelle können Beschädigungen an der Zelle auftreten, die zu einer vollständigen Zerstörung der Zelle führen können. Abhängig von der jeweiligen Anwendung der Zellen in einem Zellenstapel können mehrere Sensorelemente an einer Zelle und/oder an mehreren Zellen des Zellenstapels zur Temperaturüberwachung angeordnet werden.

Hierfür beschreibt beispielsweise die US 2013/0230755 A1 eine flexible Leitung, die zwischen den Zellen eines Zellenstapels angeordnet werden kann und an deren Ende ein Temperatursensor angeschlossen werden kann.

Eine weitere Temperatursensoreinheit zur Erfassung einer Zellentemperatur wird in der US 2013/0004811 A1 beschrieben. Die Temperatursensoreinheit umfasst ein flexibles Substrat mit einem darauf angeordneten Widerstandsthermometer mit Anschlüssen, die an dem Gehäuse einer Batteriezelle angeschlossen werden können.

CN 1 796 951 A, US 2013/209846 A1, DE 10 2010 046992 A1, WO 2012/035494 A1, DE 11 2011 104686 T5, US 2015/007665 A1 und JP H05 10826 A offenbaren ebenfalls flexible Sensoreinheiten.

Allerdings haben die aus dem Stand der Technik bekannten Temperatursensoreinheiten einen sehr komplexen und platzintensiven Aufbau. Auch ermöglichen die bekannten Temperatursensoreinheiten zumeist nur das Erfassen eines Temperaturwertes an einer Position einer Zelle / eines Zellenstapels. Weiterhin können die bekannten Temperatursensoreinheiten oft nur schwierig an der/dem Zelle/Zellenstapel angeordnet werden.

Aufgabe der vorliegenden Erfindung ist es daher, eine verbesserte Temperatursensoreinheit und ein Verfahren zur Herstellung einer verbesserten Temperatursensoreinheit bereitzustellen.

Diese Aufgabe wird erfindungsgemäß durch eine Temperatursensoreinheit gemäß des Gegenstands des Patentanspruchs 1 gelöst.

Die erfindungsgemäße Sensoreinheit zur Erfassung eines räumlichen Temperaturprofils, weist hierfür auf:
zumindest ein Substrat mit einer ersten Oberfläche und einer der ersten Oberfläche zumindest bereichsweise gegenüberliegenden zweiten Oberfläche, wobei das Substrat zumindest bereichsweise flexibel ausgebildet ist;
zumindest ein Adhäsionsmittel, wobei das Adhäsionsmittel zumindest bereichsweise auf der ersten Oberfläche und/oder auf der zweiten Oberfläche angeordnet ist, zum Anbringen der Sensoreinheit an zumindest einem Messkörper; und
zumindest ein Sensorfeld, wobei das Sensorfeld zumindest zwei Sensorelemente jeweils angepasst zum Erfassen einer Temperatur umfasst, die an unterschiedlichen Positionen auf der zweiten Oberfläche des Substrats angeordnet sind, und wobei eine mehrteilig ausgebildete Nivellierungsfolie zumindest bereichsweise angeordnet ist auf der zweiten Oberfläche des Substrats.

Der Begriff "räumliches Temperaturprofil" kann in diesem Zusammenhang dafür verwendet werden, um eine Erfassung von mindestens zwei Temperaturwerten an mindestens zwei Positionen entlang eines oder mehrerer Messkörper zu bezeichnen. Die Erfassung der Temperaturwerte kann gleichzeitig oder nacheinander erfolgen. Der Begriff "unterschiedliche Positionen" kann austauschbar verwendet werden mit Begriffen wie beispielsweise "unterschiedlichen Bereichen" oder "unterschiedlichen Stellen".

Als ein Substrat, das zumindest bereichsweise flexibel ausgebildet ist kann ein Substrat verstanden werden, das unter Krafteinwirkung zumindest in bestimmten Bereichen im Wesentlichen zerstörungsfrei seine Form verändern kann. Je nach Ausführungsform kann bei Wegfall der einwirkenden Kraft das Substrat in die Ursprungsform zurückkehren, oder in der verbrachten Form bleiben. Auch können, je nach verwendeter Ausführungsform, alle Bereiche des Substrats flexibel ausgebildet sein, oder nur bestimmte Bereiche, um dadurch an die Geometrie des Messkörpers angepasst zu werden.

Im Allgemeinen kann die erfindungsgemäße Sensoreinheit zur Temperaturmessung an einer Vielzahl von unterschiedlichen Messkörpern angeordnet werden. Der Messkörper kann, je nach Anwendung, eine Batteriezelle, eine Brennstoffzelle, oder auch ein anderer sich erhitzender Körper, wie beispielsweise ein Motor, ein Heizelement in einem Sensor, oder eine Heizeinrichtung, wie beispielsweise eine Heizeinrichtung in einer Elektrischen Zigarette oder eines Aerosol-Verdampfers sein.

Zum vereinfachten Anbringen der Sensoreinheit an zumindest einem Messkörper ist erfindungsgemäß ein Adhäsionsmittel zumindest bereichsweise auf der ersten Oberfläche und/oder auf der zweiten Oberfläche des Substrats angeordnet.

Als Adhäsionsmittel kann jedes Mittel verstanden werden, das einen mechanischen Zusammenhalt von Substrat und Messkörper bewirkt. Beispielsweise kann als Adhäsionsmittel ein Klebefilm verwendet werden. Alternativ oder zusätzlich kann auch ein Klebstoff verwendet werden, der zunächst im flüssigen Zustand auf die erste und/oder zweite Oberfläche des Substrats aufgetragen wird und dann mit dem Messkörper verbunden wird.

Zur Messung des Temperaturprofils weist die Sensoreinheit ein Sensorfeld auf, das auf der zweiten Oberfläche des Substrats angeordnet ist. Das Sensorfeld kann Sensorelemente, elektrische Leitungen und optional Isolationsschichten umfassen. Die Sensorelemente können voneinander unabhängig an unterschiedlichen Positionen an dem Messkörper angeordnet werden. Alternativ oder zusätzlich kann das Sensorfeld auch ein Sensorelement mit einer zusammenhängenden Struktur umfassen, die angepasst ist mindestens zwei Temperaturwerte an mindestens zwei Positionen entlang eines oder mehrerer Messkörper zu ermitteln.

Die Sensoreinheit kann zusätzlich ein zweites Sensorfeld aufweisen, das Sensorelemente, elektrische Leitungen und optional Isolationsschichten umfassen kann und das auf der ersten Oberfläche des Substrats angeordnet ist.

Weiter vorteilhaft bringt der Einsatz einer erfindungsgemäßen Sensoreinheit einen Kostenvorteil gegenüber dem Einsatz von Einzelsensoreinheiten mit sich, da Einzelsensoreinheiten individuell positioniert und kontaktiert werden müssen.

Mit der Erfindung ist es erstmalig gelungen eine einfach und platzsparend zu integrierenden Sensoreinheit bereitzustellen, die es ermöglicht Temperaturwerte an verschiedenen Positionen an einem komplexen Messkörper parallel zu erfassen.

Erfindungsgemäß umfasst das Sensorfeld zumindest zwei Sensorelemente, die jeweils angepasst sind zum Erfassen einer Temperatur, und die an unterschiedlichen Positionen auf der zweiten Oberfläche des Substrats angeordnet sind.

Die beiden Sensorelemente können zumindest teilweise miteinander verbunden sein, beispielsweise können die Sensorelemente eine gemeinsame Masse aufweisen. Alternativ können die Sensorelemente auch voneinander unabhängig kontaktiert werden. Auch kann das Sensorfeld, abhängig von dem geplanten Einsatzgebiet, mehr als nur zwei Sensorelemente aufweisen.

Vorteilhaft können durch die Verwendung von mehreren Sensorelementen in einem Sensorfeld, Temperaturwerte an unterschiedlichen Positionen eines Messkörpers erfasst werden.

In einem Beispiel ist zumindest ein Sensorelement auf der zweiten Oberfläche mittels zumindest einer Leiterbahn auf der zweiten Oberfläche elektrisch kontaktiert, und/oder zumindest ein Sensorelement auf der zweiten Oberfläche ist mittels zumindest einer Leiterbahn auf der ersten Oberfläche elektrisch kontaktiert, wobei zumindest ein Durchkontaktierungspunkt durch das Substrat das Sensorelement auf der zweiten Oberfläche mit der Leiterbahn auf der ersten Oberfläche elektrisch verbindet.

Die elektrische Kontaktierung der Sensorelemente kann so erfolgen, dass auf der gleichen Seite des Substrats, auf der auch die Sensorelemente angeordnet sind, auch die jeweiligen Leiterbahnen zur Kontaktierung der Sensorelemente angeordnet sind. Alternativ oder zusätzlich hierzu können Leiterbahnen auch auf der gegenüberliegenden ersten Oberfläche des Substrats angeordnet sein und mittels Durchkontaktierungspunkte die Kontakte der Sensorelemente auf der zweiten Oberfläche elektrisch kontaktieren. Der Begriff "Durchkontaktierungspunkt" kann in diesem Zusammenhang als ein leitfähiger Bereich verstanden werden, der sich durch das Material des ansonsten nicht leitfähigen Substrats von der ersten Oberfläche des Substrats bis hin zu der zweiten Oberfläche des Substrats erstreckt und eine elektrische Verbindung zwischen einer Leiterbahn auf der ersten Oberfläche mit einer Leiterbahn auf der zweiten Oberfläche herstellt.

Vorteilhaft können durch eine zumindest teilweise Anordnung der Leiterbahnen auf der ersten Oberfläche des Substrats, die Sensorelemente platzsparend auf dem Substrat angeordnet werden. Durch eine derartige Anordnung kann die entstehende Sensoreinheit kompakt ausgebildet werden.

In einem weiteren Beispiel sind die Sensorelemente zumindest bereichsweise aus einer gemeinsamen zentralen Leiterbahn ausgebildet, die auf der ersten Oberfläche und/oder auf der zweiten Oberfläche angeordnet ist.

Beispielsweise kann der Massekontakt als gemeinsame Leiterbahn ausgebildet werden, um hierdurch einen kompakten und materialsparenden Aufbau zu erreichen.

In noch einem Beispiel umfassen die Sensorelemente Widerstandselemente, insbesondere mäanderförmige Widerstandslinien aus einem leitfähigen Material, insbesondere Platin.

Vorteilhaft kann durch ein Anordnen von mäanderförmigen Widerstandslinien auf dem Substrat sehr dünne Sensorelemente gebildet werden, die zu einem kompakten und materialsparenden Aufbau beitragen.

In einem Beispiel sind die Widerstandselemente auf die zweite Oberfläche aufgedruckt, und/oder aufgedampft.

Besonders vorteilhaft können durch einen direkten Druck der Widerstandselemente auf das Substrat, auch kleine Stückzahlen von entsprechend hergestellten Sensoreinheiten kostengünstig, ohne aufwendige Umrüstkosten des Produktionsmittels, hergestellt werden. Auch kann, wenn die Widerstandselemente aufgedruckt werden sollen, der gesamte Designprozess der Sensoreinheit digital erfolgen, wodurch die Zeiten von dem Entwurf bis zu einem Prototyp deutlich reduziert werden können.

In einem weiteren Beispiel umfassen die Sensorelemente Flip-Chips. Temperatursensoren, die als Flip-Chips ausgebildet sind, sind zum Beispiel in der DE102011103828A1 beschrieben. Flip-Chips bilden eine an Kontaktfeldern befestigte Brücke zwischen den Leiterbahnen und ermöglichen eine einfache Bestückung eines Sensorfelds mit zum Beispiel Temperatursensoren.

Die Leiterbahnen eines Sensorfelds können leitfähige Materialien umfassen, beispielsweise Metalle, leitfähige Metalloxide, umfassend leitfähige Partikel, gefüllten Polymeren oder intrinsisch leitfähige Polymere.

In einem Beispiel überkreuzen sich zumindest zwei Leiterbahnen zumindest bereichsweise, wobei zumindest eine Isolationsschicht in einem Bereich, in dem sich die beiden Leiterbahnen überkreuzen, zwischen den beiden Leiterbahnen angeordnet ist.

Die Isolationsschicht kann beispielsweise elektrisch isolierende Materialien umfassen, beispielsweise isolierende Metalloxide oder Polymere, insbesondere Polyimid, um Kurzschlüsse zu vermeiden.

In noch einem weiteren Beispiel weisen die Leiterbahnen jeweils zumindest ein Anschlussmittel, insbesondere zumindest ein Anschlusspad, umfassend ein Silber- und/oder Kupfermaterial zur Kontaktierung der Sensorelemente auf.

Vorteilhaft kann auf die Anschlusspads ein Verbindungsmittel, beispielsweise eine Kupferader, aufgelötet werden, um die Sensoreinheit mit einem Auswertemittel, beispielsweise mit einem Controller, zu verbinden.

In einem weiteren Beispiel umfasst das Substrat eine flexible Folie, insbesondere eine Polyimidfolie.

Vorteilhaft dämpft eine flexible Folie Vibrationen des elektronischen Aufbaus ab und verhindert Risse in den metallischen Zuleitungen und Verbindungsbrüche an den Kontaktstellen. Weiter vorteilhaft ist die Sensoreinheit durch die flexible Folie verformbar und lässt sich so der Oberfläche der Sensoreinheit anpassen.

In einem Beispiel umfasst das Adhäsionsmittel zumindest einen Klebefilm.

Vorteilhaft kann mittels des Klebefilms die Sensoreinheit einfach und kostengünstig an einer Oberfläche des Messkörpers befestigt werden. Der Klebefilm kann sich entweder über die gesamte erste und/oder zweite Oberfläche erstrecken, oder sich nur über einen Teilbereich der ersten und/oder zweiten Oberfläche erstrecken.

In einem weiteren Beispiel sind Temperatursensoren, die als Flip-Chips ausgebildet sind auf der zweiten Oberfläche des Substrats befestigt. Die dem Substrat abgewandten Seiten des Flip-Chips sind direkt mit dem Messkörper über einen Adhäsionsfilm verbunden.

Der Klebefilm kann ein selbstklebendes Material aufweisen, beispielweise Polymere aufweisen, wie Polyacrylaten, Polyamiden, Polyurethanen, Siliconen oder Epoxiden. Es können auch beidseitig klebende Klebefilme, insbesondere hochtemperaturbeständige Klebefilme auf Basis von Polyimidbändern zur Fixierung der Sensoreinheit am Messkörper verwendet werden.

Erfindungsgemäß weist die Sensoreinheit auf: zumindest eine mehrteilig ausgebildete Nivellierungsfolie, insbesondere eine Nivellierungsfolie umfassend ein Polymer, ein Leiterplattenmaterial, insbesondere ein Phenolhartpapier oder ein glasfaserverstärktes Epoxid, zumindest bereichsweise angeordnet auf der zweiten Oberfläche des Substrats.

Die Dicke der Nivellierungsfolie kann mindestens der Höhe der auf dem Substrat befestigten und optional mit einer Adhäsionsschicht ausgestatteten Sensorelemente entsprechen. Bevorzugt beträgt die Dicke der Nivellierungsfolie 0,1mm - 1 mm. Weiterhin kann die Nivellierungsfolie Aussparungen umfassen, um die Sensorelemente zumindest teilweise zu umschließen. Die Nivellierungsfolie ist mehrteilig ausgestaltet.

Beispielsweise kann die Nivellierungsfolie auf dem Substrat so positioniert werden, dass die Aussparungen die Sensorelemente zumindest teilweise umschließen. Die Nivellierungsfolie kann mit dem Substrat durch Kleben oder Heißpressen verbunden werden. Die mehrteilige Ausgestaltung der Nivellierungsfolie hat den Vorteil, dass die Flexibilität der Sensoreinheit erhalten bleibt.

Durch das Aufbringen einer Nivellierungsfolie auf eine Sensoreinheit wird vorteilhaft erreicht, dass die Handhabung der Sensoreinheiten vereinfacht wird. So werden zum Beispiel bei der Verbindung der Sensoreinheit mit einen Messkörper, insbesondere während der Einführung der Sensoreinheit in schmale Schlitze eines Messkörpers die Sensorelemente vor mechanischer Beschädigung geschützt. Ein weiterer Vorteil ist, dass das Verhaken der Sensoreinheit mit dem Messkörper beim Einführen verhindert wird.

Weiterhin kann in dem zuvor genannten Beispiel die Sensoreinheit aufweisen:
zumindest eine Abdeckfolie angeordnet auf der zweiten Oberfläche der Substrats zumindest abschnittsweise in Aussparungsbereichen der Nivellierungsfolie, insbesondere angeordnet auf dem Sensorfeld, und/oder
zumindest ein Vergussmaterial, insbesondere ein Siliconcompound, angeordnet auf der zweiten Oberfläche des Substrats zumindest abschnittsweise in Aussparungsbereichen der Nivellierungsfolie, insbesondere angeordnet auf dem Sensorfeld.

Auch die Abdeckfolie kann einteilig oder mehrteilig ausgestaltet sein und kann zumindest Bereichsweise die Nivellierungsfolie und die Sensorelemente abdecken. Dadurch kann vorteilhaft das Eindringen von Feuchtigkeit in den Kontaktbereich verhindert werden. Die Abdeckfolie kann auch als Adhäsionsfolie ausgestaltet sein. Alternativ oder zusätzlich kann zumindest ein Sensorelement in zumindest einer Aussparung der Nivellierungsfolie mit einem Vergussmaterial abgedeckt sein, insbesondere mit einem Siliconcompound, um das Eindringen von Feuchtigkeit zu verhindern. Hierbei ist es besonders vorteilhaft, wenn der Siliconcompound eine gute Wärmeleitfähigkeit hat.

Die Erfindung schlägt auch eine Verwendung einer erfindungsgemäßen Sensoreinheit zum Erfassen eines räumlichen Temperaturprofils an einem Messkörper, insbesondere an unterschiedlichen Zellen einer Batterie oder einer Brennstoffzelle vor.

Auch wird mit der Erfindung eine galvanische Zelle, insbesondere eine Batteriezelle oder eine Brennstoffzelle, vorgeschlagen mit zumindest einer an der galvanischen Zelle angeordneten erfindungsgemäßen Sensoreinheit.

Weiterhin wird mit der Erfindung ein Verfahren zur Herstellung einer Sensoreinheit zur Erfassung eines räumlichen Temperaturprofils vorgeschlagen, aufweisend die Schritte:
Bereitstellen zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist;
Anordnen zumindest eines Adhäsionsmittels, zumindest bereichsweise, auf der ersten und/oder auf der zweiten Oberfläche des Substrats, zum Anbringen der Sensoreinheit an zumindest einem Messkörper; und
Anordnen zumindest eines Sensorfelds auf der zweiten Oberfläche des Substrats, wobei das Sensorfeld zumindest zwei Sensorelemente jeweils angepasst zum Erfassen einer Temperatur umfasst, die an unterschiedlichen Positionen auf der zweiten Oberfläche des Substrats angeordnet sind, und Anordnen einer mehrteilig ausgebildeten Nivellierungsfolie zumindest bereichsweise auf der zweiten Oberfläche des Substrats.

In einem Beispiel weist das Anordnen zumindest eines Sensorfelds auf:
Anordnen des Sensorfelds mittels Siebdruck, Gravurdruck, Tampondruck und/oder mittels Inkjetdruck auf Basis einer Tinte umfassend Metallpartikel aus Gold, Silber, Platin, und/oder eine Silber-Palladium Legierung, und/oder
Anordnen des Sensorfelds mittels Aufdampfen einer Metallschicht auf die zweite Oberfläche und/oder Laser-Ablation der Metallschicht, und/oder
Anordnen des Sensorfelds mittels eines Aerosol-Depositionsverfahrens durch Abscheidung von Aerosolen umfassend Metalle, insbesondere Edelmetalle.

Beispielsweise kann für den Druck des Sensorfelds mittels Inkjet eine Inkjettinte auf Basis von Metallpartikeln, insbesondere Nanometallpartikeln verwendet werden. Die Herstellung von Goldnanopartikeln ist beispielsweise aus der DE 10 2013 016 280 A1 bekannt und ist besonders geeignet um leitfähige oxidationsresistente Strukturen zu erzeugen.

Innerhalb eines Sensorfelds können die das Sensorfeld umfassenden Sensorelemente, elektrischen Leitungen und Isolationsschichten aus unterschiedlichen Materialien umfassen. Beispielsweise können die Sensorelemente Edelmetalle umfassen, die elektrischen Leitungen können Kupfer oder Silber umfassen, und die Isolationsschichten können Polyimid umfassen.

In einem weiteren Beispiel weist das Anordnen zumindest eines Sensorfelds auf:
Anordnen zumindest eine Leiterbahn, insbesondere einer Vielzahl von Leiterbahnen, zur elektrischen Kontaktierung von zumindest einem von zumindest zwei Sensorelementen, die von dem Sensorfeld umfasst sind, und/oder
Anordnen zumindest eines Anschlussmittels, insbesondere zumindest eines Anschlusspads an der Leiterbahn.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Ansicht einer zweiten Oberfläche einer Sensoreinheit gemäß einer Ausführungsform der Erfindung;
- Figur 2: ein schematisches Anschlussschema eines Sensorfelds gemäß einer Ausführungsform der Erfindung;
- Figuren 3a, 3b: schematische Ansichten einer zweiten und einer ersten Oberfläche einer Sensoreinheit gemäß einer Ausführungsform der Erfindung;
- Figur 4: eine schematische Aufsicht eines Messkörpers mit einer daran angeordneten Sensoreinheit gemäß einer Ausführungsform der Erfindung;
- Figur 5: eine schematische Seitenansicht eines Bereiches des Messkörpers mit einer daran angeordneten Sensoreinheit gemäß der in Figur 4 gezeigten Ausführungsform;
- Figur 6: zeigt eine schematische Ansicht einer zweiten Oberfläche einer Sensoreinheit mit einer darauf angeordneten einteiligen Nivellierungsfolie gemäß eines Beispiels, das nicht Teil der Erfindung ist;

- Figur 7: zeigt eine schematische Ansicht einer zweiten Oberfläche einer Sensoreinheit mit einer darauf angeordneten mehrteiligen Nivellierungsfolie gemäß der Erfindung; und
- Figur 8: ein Verfahren zum Herstellen einer Sensoreinheit gemäß einer Ausführungsform der Erfindung.

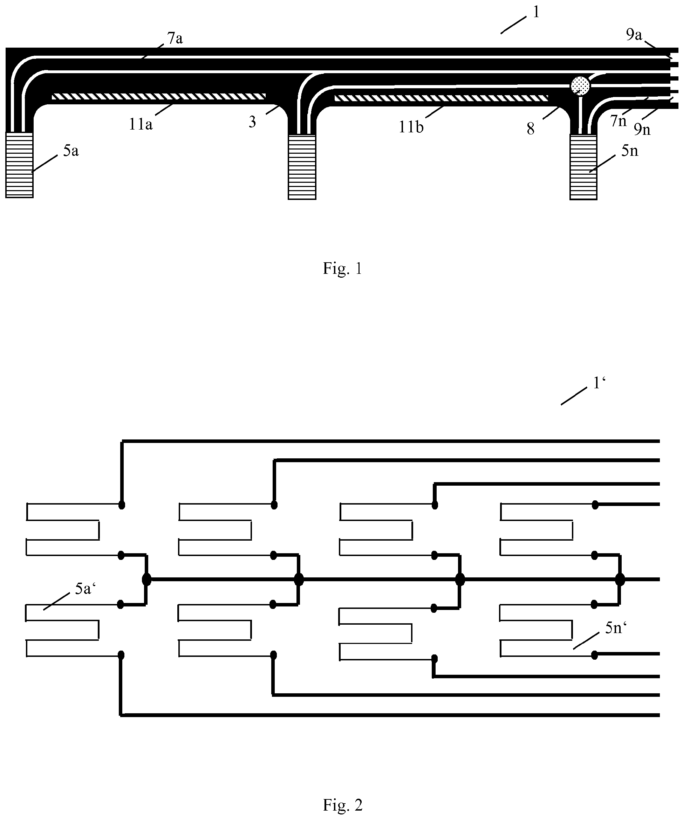

Figur 1 zeigt eine schematische Ansicht einer zweiten Oberfläche einer Sensoreinheit 1 gemäß einer Ausführungsform der Erfindung.

In der gezeigten Ausführungsform sind auf der gezeigten zweiten Oberfläche des Substrats 3 drei Sensorelemente 5a - 5n in einem Sensorfeld angeordnet, um drei Temperaturwerte an drei unterschiedlichen Positionen an einem Messkörper (nicht gezeigt) zu ermitteln. In weiteren Ausführungsformen kann das Sensorfeld auch nur zwei, oder mehr als drei Sensorelemente umfassen. Auch kann, abhängig von dem vorgesehenen Einsatzgebiet, die Geometrie des Substrats und die Anordnung der Sensorelemente auf dem Substrat anders als es in Figur 1 gezeigt wird gewählt werden. Beispielsweise kann das Substrat in weiteren Ausführungsformen auch rund oder oval ausgestaltet sein.

Weiterhin zeigt Figur 1, dass die Sensorelemente 5a - 5n auf der zweiten Oberfläche mittels Leiterbahnen 7a - 7n auf der zweiten Oberfläche elektrisch kontaktiert sind. Im Bereich überkreuzender Leiterbahnen ist zumindest eine Isolationsschicht 8 zwischen der unten liegenden und der oben liegenden Leiterbahn aufgebracht, um Kurzschlüsse zu vermeiden. In der gezeigten Ausführungsform ist die Isolationsschicht 8 im Wesentlichen rund ausgestaltet und im Wesentlichen nur in dem Bereich angeordnet, in dem sich die Leiterbahnen überkreuzen. In nicht gezeigten Ausführungsformen kann sich die Isolationsschicht auch über weitere Bereiche des Substrats erstrecken, beispielsweise kann sich die Isolationsschicht vollflächig über Leiterbahnen einer ersten Ebene erstrecken, um die Leiterbahnen der ersten Ebene von den überkreuzenden Leiterbahnen einer darauf angeordneten zweiten Ebene elektrisch zu isolieren.

An den Enden der Leiterbahnen 7a - 7n sind Anschlusspads 9a - 9n zur Kontaktierung der Sensorelemente angeordnet. Auf die Anschlusspads 9a - 9n kann ein Verbindungsmittel, beispielsweise eine Kupferader, aufgelötet werden, um die Sensoreinheit 1 mit einem Auswertemittel (nicht gezeigt) zu verbinden. In weiteren Ausführungsformen kann das Auswertemittel auch direkt auf dem Substrat angeordnet sein.

In Figur 1 werden auch zwei Klebefilme 11a, 11b als Adhäsionsmittel gezeigt. Die beiden Klebefilme sind auf der zweiten Oberfläche angeordnet, so dass die Sensoreinheit 1 mit der zweiten Oberfläche an dem Messkörper angeordnet werden kann. In weiteren Ausführungsformen kann das Adhäsionsmittel alternativ oder zusätzlich zu der gezeigten Ausführungsform auch auf der ersten Oberfläche, die der zweiten Oberfläche gegenüberliegt, angeordnet werden. Auch würde der Fachmann wissen, dass auch lediglich ein einzelner Klebefilm oder aber mehr als zwei Klebefilme als Adhäsionsmittel verwendet werden können.

Figur 2 zeigt ein schematisches Anschlussschema eines Sensorfelds gemäß einer Ausführungsform der Erfindung.

In der gezeigten Ausführungsform umfassen die Sensorelemente 5a' - 5n' mäanderförmige Widerstandslinien aus einem leitfähigen Material. Für zuverlässige Messungen kann beispielsweise Platin verwendet werden, da dieses besonders wenig Alterung zeigt, und da sich damit Temperaturmessungen mit geringen Fehlergrenzen durchführen lassen.

Die Sensorelemente 5a' - 5n' haben jeweils einen gemeinsamen Masseanschluss und separate Anschlüsse, um die jeweiligen Temperaturwerte ermitteln zu können.

Vorteilhaft können durch die Verwendung von mehreren Sensorelementen in einem Sensorfeld, Temperaturwerte an unterschiedlichen Positionen eines Messkörpers erfasst werden.

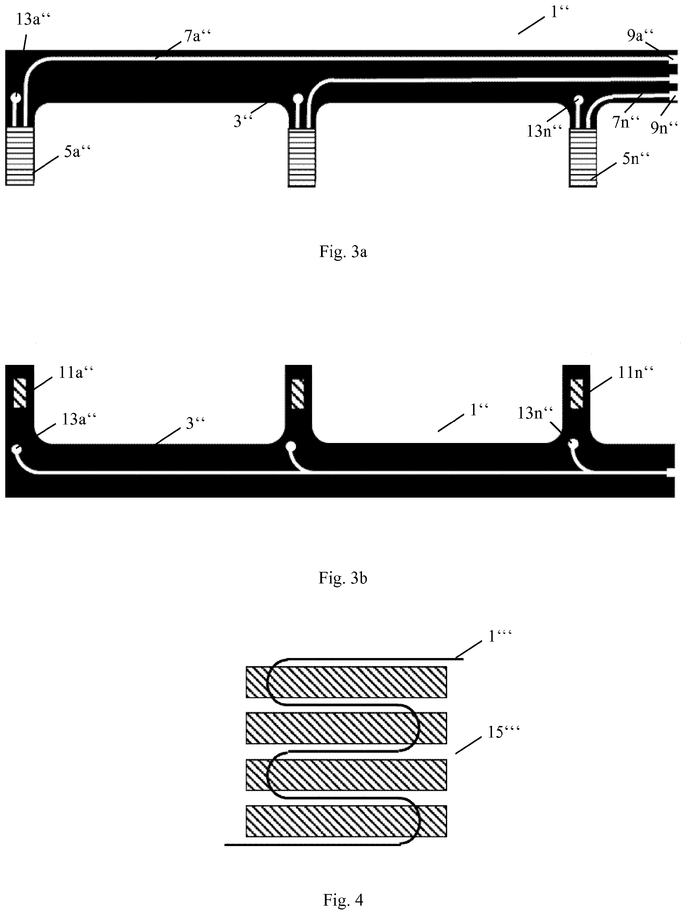

Figur 3a zeigt eine schematische Ansicht einer zweiten Oberfläche einer Sensoreinheit 1" gemäß einer weiteren Ausführungsform der Erfindung. Der Aufbau der in Figur 3a gezeigten Sensoreinheit 1" kann im Wesentlichen dem Aufbau der in Figur 1 gezeigten Sensoreinheit 1 entsprechen. Allerdings weist die in Figur 3a gezeigte Sensoreinheit 1" im Gegensatz zu der in Figur 1 gezeigten Sensoreinheit 1 Durchkontaktierungspunkte 13a" - 13n" durch das Substrat 3" auf.

Diese Durchkontaktierungspunkte 13a" - 13n" ermöglichen eine elektrische Kontaktierung der Sensorelemente 5a" - 5n" derart, dass ein Teil der jeweiligen Leiterbahnen zur Kontaktierung der Sensorelemente 5a" - 5n" auf der gleichen Seite, d.h. auf der zweiten Oberfläche, des Substrats 3" angeordnet sind, wie auch die Sensorelemente 5a" - 5n". Weitere Leiterbahnen sind auf der gegenüberliegenden ersten Oberfläche angeordnet. In Figur 3b wird gezeigt, dass der gemeinsame Masseanschluss auf der ersten Oberfläche angeordnet ist. In nicht gezeigten Ausführungsformen können aber auch alle oder lediglich ein Teil der Sensorelemente mit Leiterbahnen kontaktiert werden, die auf der ersten Oberfläche verlaufen. Die elektrische Verbindung zwischen Sensorelemente und Leiterbahnen kann entsprechen mittels Durchkontaktierungspunkte hergestellt werden.

In Figur 3b werden auch drei Klebefilme 11a" - 11n" als Adhäsionsmittel gezeigt. Diese Klebefilme 11 a" - 11n" sind derart auf der ersten Oberfläche angeordnet, dass die Sensoreinheit 1" mit der ersten Oberfläche an einem Messkörper (nicht gezeigt) angeordnet werden kann. In alternativen Ausführungsformen können auch mehr oder weniger als drei Klebefilme zum Einsatz kommen. Beispielsweise kann ein Klebefilm vollflächig auf der ersten Oberfläche angeordnet sein.

Figur 4 zeigt eine schematische Seitenansicht eines Messkörpers 15‴ mit einer daran angeordneten Sensoreinheit 1‴ gemäß einer Ausführungsform der Erfindung.

Wie es beispielhaft in der Figur 4 gezeigt wird, ermöglicht die flexible Ausgestaltung des Substrats, das Erfassen von verschiedenen Temperaturwerten an verschiedenen Positionen an dem Messkörper 15‴. Der in Figur 4 gezeigte Messkörper 15‴ kann beispielsweise mehrere Schichten, beispielsweise mehrere galvanische Zellen umfassen, wobei die Sensoreinheit 1‴ zwischen diesen Zellen hindurchgeführt ist.

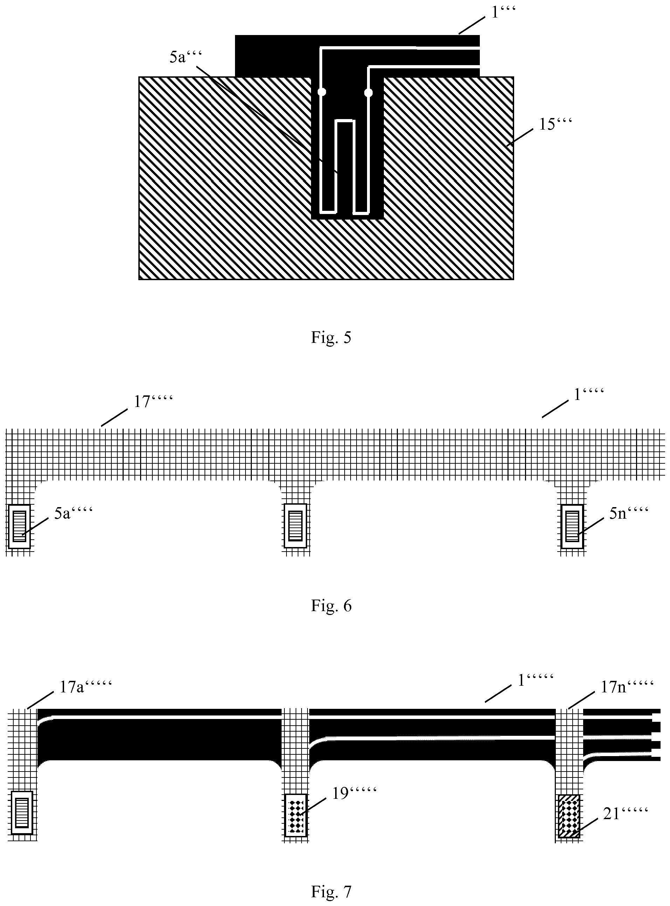

Figur 5 zeigt eine schematische Seitenansicht eines Bereiches des Messkörpers 15‴ mit einer daran angeordneten Sensoreinheit 1‴. Der gezeigte Ausschnitt zeigt einen Bereich des bereits in Figur 4 gezeigten Messkörpers 15‴. Wie es in Figur 5 gezeigt wird, ist zumindest ein Sensorelement 5a‴ zwischen zwei Schichten des Messkörpers 15‴ angeordnet.

Figur 6 zeigt eine schematische Ansicht einer zweiten Oberfläche einer Sensoreinheit 1ʺʺ mit einer darauf angeordneten einteiligen Nivellierungsfolie 17ʺʺ.

In dem gezeigten Beispiel ist die Nivellierungsfolie 17ʺʺ einteilig ausgestaltet, entspricht im Wesentlichen der Geometrie des Substrats und deckt die Bereiche um die Sensorelemente 5aʺʺ - 5nʺʺ auf der zweiten Oberfläche ab Die Sensorelemente 5aʺʺ - 5nʺʺ befinden sich in der gezeigten Ausführungsform in Aussparungen der Nivellierungsfolie 17ʺʺ, die als weiße Umrandungen dargestellt sind.

Figur 7 zeigt eine schematische Ansicht einer zweiten Oberfläche einer Sensoreinheit 1‴ʺ mit einer darauf angeordneten mehrteiligen Nivellierungsfolie 17‴ʺ gemäß der Erfindung.

In der gezeigten Ausführungsform bedecken die Abschnitte der Nivellierungsfolie 17a‴ʺ - 17n‴ʺ zumindest teilweise die Leiterbahnen und umschließen zumindest teilweise die Sensorelemente.

In Figur 7 wird gezeigt, dass zumindest ein Sensorelement mit einer Abdeckfolie 19ʺʺ abgedeckt sein kann, um das Eindringen von Feuchtigkeit in den Kontaktbereich des Sensorelements zu verhindern. Alternativ oder zusätzlich kann, wie es ebenfalls in Figur 7 gezeigt wird, auch ein Vergussmaterial 21‴ʺ auf einem Sensorelement und/oder in einem Bereich in der Aussparung angeordnet sein, um das Eindringen von Feuchtigkeit zu verhindern.

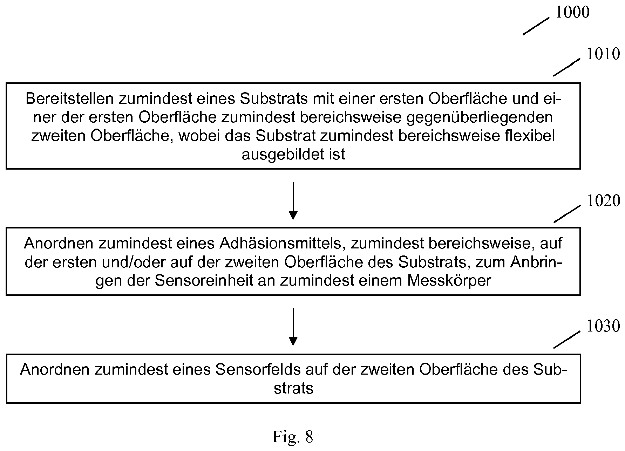

Figur 8 zeigt ein Verfahren 1000 zum Herstellen einer Sensoreinheit gemäß einer Ausführungsform der Erfindung, mit den Schritten:
Bereitstellen 1010 zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist;
Anordnen 1020 zumindest eines Adhäsionsmittels, zumindest bereichsweise, auf der ersten und/oder auf der zweiten Oberfläche des Substrats, zum Anbringen der Sensoreinheit an zumindest einem Messkörper; und
Anordnen 1030 zumindest eines Sensorfelds auf der zweiten Oberfläche des Substrats.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

### Bezugszeichenliste

- 1, 1', 1", 1‴, 1ʺʺ, 1‴ʺ: Sensoreinheit
- 3, 3": Substrat
- 5a, 5a', 5a", 5a‴, 5aʺʺ, 5n, 5n', 5n", 5nʺʺ: Sensorelement
- 7a, 7a", 7n, 7n": Leiterbahn
- 8: Isolationsschicht
- 9a, 9a', 9n, 9n': Anschlusspad
- 11a, 11a" 11b, 11n": Klebefilm
- 13a", 13n": Durchkontaktierungspunkt
- 15‴: Messkörper
- 17ʺʺ, 17a‴ʺ, 17n‴ʺ: Nivellierungsfolie
- 19‴ʺ: Abdeckfolie
- 21‴ʺ: Vergussmaterial

- 1000: Verfahren zur Herstellung einer Sensoreinheit
- 1010: Bereitstellen eines Substrats
- 1020: Anordnen eines Adhäsionsmittels
- 1030: Anordnen eines Sensorfelds

## Patentansprüche

1. Sensoreinheit zur Erfassung eines räumlichen Temperaturprofils, aufweisend:
zumindest ein Substrat (3, 3") mit einer ersten Oberfläche und einer der ersten Oberfläche zumindest bereichsweise gegenüberliegenden zweiten Oberfläche, wobei das Substrat (3, 3") zumindest bereichsweise flexibel ausgebildet ist;
zumindest ein Adhäsionsmittel, wobei das Adhäsionsmittel zumindest bereichsweise auf der ersten Oberfläche und/oder auf der zweiten Oberfläche angeordnet ist, zum Anbringen der Sensoreinheit an zumindest einem Messkörper (15‴); und
zumindest ein Sensorfeld,
wobei das Sensorfeld zumindest zwei Sensorelemente (5a, 5a', 5a", 5a‴, 5aʺʺ, 5n, 5n' 5n", 5nʺʺ) jeweils angepasst zum Erfassen einer Temperatur umfasst, die an unterschiedlichen Positionen auf der zweiten Oberfläche des Substrats (3, 3") angeordnet sind, **dadurch gekennzeichnet, dass** zumindest eine mehrteilig ausgebildete Nivellierungsfolie (17ʺʺ, 17a‴ʺ, 17n‴ʺ) zumindest bereichsweise angeordnet ist auf der zweiten Oberfläche des Substrats (3, 3").

2. Sensoreinheit nach Anspruch 1, wobei zumindest ein Sensorelement (5a, 5a', 5a", 5a‴, 5aʺʺ, 5n, 5n', 5n", 5nʺʺ) auf der zweiten Oberfläche mittels zumindest einer Leiterbahn (7a, 7a", 7n, 7n") auf der zweiten Oberfläche elektrisch kontaktiert ist, und/oder wobei zumindest ein Sensorelement (5a, 5a', 5a", 5a‴, 5aʺʺ, 5n, 5n', 5n", 5nʺʺ) auf der zweiten Oberfläche mittels zumindest einer Leiterbahn (7a, 7a", 7n, 7n") auf der ersten Oberfläche elektrisch kontaktiert ist, wobei zumindest ein Durchkontaktierungspunkt durch das Substrat (3, 3") das Sensorelement (5a, 5a', 5a", 5a‴, 5aʺʺ, 5n, 5n', 5n", 5nʺʺ) auf der zweiten Oberfläche mit der Leiterbahn (7a, 7a", 7n, 7n") auf der ersten Oberfläche elektrisch verbindet, insbesondere wobei die Sensorelemente (5a, 5a', 5a", 5a‴, 5aʺʺ, 5n, 5n', 5n", 5nʺʺ) zumindest bereichsweise aus einer gemeinsamen zentralen Leiterbahn (7a, 7a", 7n, 7n") ausgebildet sind, die auf der ersten Oberfläche und/oder auf der zweiten Oberfläche angeordnet ist.

3. Sensoreinheit nach Anspruch 2, wobei die Sensorelemente (5a, 5a', 5a", 5a‴, 5aʺʺ, 5n, 5n', 5n", 5nʺʺ) Widerstandselemente, insbesondere mäanderförmige Widerstandslinien aus einem leitfähigen Material, insbesondere Platin, umfassen, insbesondere wobei die Widerstandselemente auf die zweite Oberfläche aufgedruckt, und/oder aufgedampft sind.

4. Sensoreinheit nach einem der Ansprüche 2 oder 3, wobei sich zumindest zwei Leiterbahnen (7a, 7a", 7n, 7n") zumindest bereichsweise überkreuzen, und wobei zumindest eine Isolationsschicht (8) in einem Bereich, in dem sich die beiden Leiterbahnen (7a, 7a", 7n, 7n") überkreuzen, zwischen den beiden Leiterbahnen (7a, 7a", 7n, 7n") angeordnet ist.

5. Sensoreinheit nach einem der Ansprüche 2 bis 4, wobei die Leiterbahnen (7a, 7a", 7n, 7n") jeweils zumindest ein Anschlussmittel, insbesondere zumindest ein Anschlusspad (9a, 9a', 9n, 9n'), umfassend ein Silber- und/oder Kupfermaterial zur Kontaktierung der Sensorelemente (5a, 5a', 5a", 5a‴, 5aʺʺ, 5n, 5n', 5n", 5nʺʺ) aufweisen.

6. Sensoreinheit nach einem der vorangehenden Ansprüche, wobei das Substrat (3, 3") eine flexible Folie, insbesondere eine Polyimidfolie umfasst.

7. Sensoreinheit nach einem der vorangehenden Ansprüche, wobei das Adhäsionsmittel zumindest einen Klebefilm (11a, 11 a" 11b, 11n") umfasst.

8. Sensoreinheit nach Anspruch 1, aufweisend:
zumindest eine Abdeckfolie (19‴ʺ) angeordnet auf der zweiten Oberfläche der Substrats (3, 3") zumindest abschnittsweise in Aussparungsbereichen der Nivellierungsfolie (17ʺʺ, 17a‴ʺ, 17n‴ʺ), insbesondere angeordnet auf dem Sensorfeld, und/oder
zumindest ein Vergussmaterial (21‴ʺ), insbesondere ein Siliconcompound, angeordnet auf der zweiten Oberfläche des Substrats (3, 3") zumindest abschnittsweise in Aussparungsbereichen der Nivellierungsfolie (17ʺʺ, 17a‴ʺ, 17n‴ʺ), insbesondere angeordnet auf dem Sensorfeld.

9. Verwendung einer Sensoreinheit (1, 1', 1", 1‴) nach einem der vorangehenden Ansprüche zum Erfassen eines räumlichen Temperaturprofils an einem Messkörper (15‴), insbesondere an unterschiedlichen Zellen einer Batterie oder einer Brennstoffzelle.

10. Galvanische Zelle, insbesondere eine Batteriezelle oder eine Brennstoffzelle, mit zumindest einer an der galvanischen Zelle angeordneten Sensoreinheit (1, 1', 1", 1‴) nach einem der Ansprüche 1 bis 8.

11. Verfahren zur Herstellung einer Sensoreinheit zur Erfassung eines räumlichen Temperaturprofils, aufweisend die Schritte:
Bereitstellen (1010) zumindest eines Substrats (3, 3") mit einer ersten Oberfläche und einer der ersten Oberfläche zumindest bereichsweise gegenüberliegenden zweiten Oberfläche, wobei das Substrat (3, 3") zumindest bereichsweise flexibel ausgebildet ist;
Anordnen (1020) zumindest eines Adhäsionsmittels, zumindest bereichsweise, auf der ersten und/oder auf der zweiten Oberfläche des Substrats (3, 3"), zum Anbringen der Sensoreinheit an zumindest einem Messkörper (15‴); und
Anordnen (1030) zumindest eines Sensorfelds auf der zweiten Oberfläche des Substrats
(3, 3'), wobei das Sensorfeld zumindest zwei Sensorelemente (5a, 5a', 5a", 5a‴, 5aʺʺ, 5n, 5n', 5n", 5n‴, 5nʺʺ) jeweils angepasst zum Erfassen einer Temperatur umfasst, die an unterschiedlichen Positionen auf der zweiten Oberfläche des Substrats (3, 3') angeordnet sind, und
Anordnen einer mehrteilig ausgebildeten Nivellierungsfolie (17ʺʺ, 17a‴ʺ, 17n‴ʺ) zumindest bereichsweise auf der zweiten Oberfläche des Substrats (3, 3").

12. Verfahren nach Anspruch 11, wobei das Anordnen (1030) zumindest eines Sensorfelds aufweist:
Anordnen des Sensorfelds mittels Siebdruck, Gravurdruck, Tampondruck und/oder mittels Inkjetdruck auf Basis einer Tinte umfassend Metallpartikel aus Gold, Silber, Platin, und/oder eine Silber-Palladium Legierung, und/oder
Anordnen des Sensorfelds mittels Aufdampfen einer Metallschicht auf die zweite Oberfläche und/oder Laser-Ablation der Metallschicht, und/oder
Anordnen des Sensorfelds mittels eines Aerosol-Depositionsverfahrens durch Abscheidung von Aerosolen umfassend Metalle, insbesondere Edelmetalle.

13. Verfahren nach Anspruch 11 oder 12, wobei das Anordnen (1030) zumindest eines Sensorfelds aufweist:
Anordnen zumindest eine Leiterbahn (7a, 7a", 7n, 7n"), insbesondere einer Vielzahl von Leiterbahnen (7a, 7a", 7n, 7n"), zur elektrischen Kontaktierung von zumindest einem von zumindest zwei Sensorelementen (5a, 5a', 5a", 5a‴, 5aʺʺ, 5n, 5n', 5n", 5nʺʺ), die von dem Sensorfeld umfasst sind, und/oder
Anordnen zumindest eines Anschlussmittels, insbesondere zumindest eines Anschlusspads (9a, 9a', 9n, 9n') an der Leiterbahn (7a, 7a", 7n, 7n").

## Claims

1. A sensor unit for measuring a spatial temperature profile, having:
at least one substrate (3, 3") having a first surface and a second surface, which is opposite the first surface at least in some regions, wherein the substrate (3, 3") is designed to be flexible at least in some regions;
at least one adhesion means, wherein the adhesion means is arranged at least in some regions on the first surface and/or on the second surface for attaching the sensor unit to at least one measurement body (15‴); and
at least one sensor field, wherein the sensor field comprises at least two sensor elements (5a, 5a', 5a'', 5a''', 5aʺʺ, 5n, 5n', 5n'', 5nʺʺ) which are in each case adapted for measuring a temperature and which are arranged at different positions on the second surface of the substrate (3, 3"), **characterized in that** at least one levelling film (17ʺʺ, 17a‴ʺ, 17n‴ʺ), which is formed in multiple pieces, is arranged at least in some regions on the second surface of the substrate (3, 3").

2. The sensor unit according to Claim 1, wherein at least one sensor element (5a, 5a', 5a", 5a‴, 5a'''', 5n, 5n', 5n'', 5nʺʺ) on the second surface is electrically contacted by means of at least one conductor track (7a, 7a'', 7n, 7n'') on the second surface, and/or
wherein at least one sensor element (5a, 5a', 5a", 5a''', 5aʺʺ, 5n, 5n', 5n'', 5nʺʺ) on the second surface is electrically contacted by means of at least one conductor track (7a, 7a", 7n, 7n") on the first surface, wherein at least one feedthrough point through the substrate (3, 3") electrically connects the sensor element (5a, 5a', 5a'', 5a''', 5aʺʺ, 5n, 5n', 5n'', 5nʺʺ) on the second surface to the conductor track (7a, 7a'', 7n, 7n'') on the first surface, in particular wherein the sensor elements (5a, 5a', 5a", 5a''', 5aʺʺ, 5n, 5n', 5n'', 5nʺʺ) are formed at least in some regions from a common central conductor track (7a, 7a", 7n, 7n'') which is arranged on the first surface and/or on the second surface.

3. The sensor unit according to Claim 2, wherein the sensor elements (5a, 5a', 5a'', 5a''', 5aʺʺ, 5n, 5n', 5n'', 5nʺʺ) comprise resistance elements, particularly meandering resistance lines made from a conductive material, particularly platinum, in particular wherein the resistance elements are printed and/or vapour-deposited onto the second surface.

4. The sensor unit according to one of Claims 2 or 3, wherein at least two conductor tracks (7a, 7a'', 7n, 7n") cross at least in some regions, and wherein at least one insulation layer (8) is arranged between the two conductor tracks (7a, 7a", 7n, 7n") in a region in which the two conductor tracks (7a, 7a'', 7n, 7n'') cross.

5. The sensor unit according to one of Claims 2 to 4, wherein the conductor tracks (7a, 7a'', 7n, 7n'') in each case have at least one connection means, particularly at least one connection pad (9a, 9a', 9n, 9n'), comprising a silver and/or copper material for contacting the sensor elements (5a, 5a', 5a'', 5a''', 5aʺʺ, 5n, 5n', 5n'', 5nʺʺ).

6. The sensor unit according to one of the preceding claims, wherein the substrate (3, 3") comprises a flexible film, particularly a polyimide film.

7. The sensor unit according to one of the preceding claims, wherein the adhesion means comprises at least one adhesive film (11a, 11a" 11b, 11n").

8. The sensor unit according to Claim 1, having:
at least one cover film (19‴ʺ), which is arranged on the second surface of the substrate (3, 3") at least in sections in recess regions of the levelling film (17ʺʺ, 17a''''', 17n‴ʺ), particularly arranged on the sensor field, and/or
at least one potting material (21‴ʺ), particularly a silicone compound, which is arranged on the second surface of the substrate (3, 3") at least in sections in recess regions of the levelling film (17ʺʺ, 17a''''', 17n‴ʺ), particularly arranged on the sensor field.

9. The use of a sensor unit (1, 1', 1'', 1‴) according to one of the preceding claims for measuring a spatial temperature profile on a measurement body (15‴), particularly at different cells of a battery or a fuel cell.

10. A galvanic cell, particularly a battery cell or a fuel cell, having at least one sensor unit (1, 1', 1", 1''') according to one of Claims 1 to 8 arranged on the galvanic cell.

11. A method for producing a sensor unit for measuring a spatial temperature profile, comprising the steps:
providing (1010) at least one substrate (3, 3") having a first surface and a second surface, which is opposite the first surface at least in some regions, wherein the substrate (3, 3") is designed to be flexible at least in some regions;
arranging (1020) at least one adhesion means at least in some regions on the first and/or on the second surface of the substrate (3, 3") for attaching the sensor unit to at least one measurement body (15‴); and
arranging (1030) at least one sensor field on the second surface of the substrate (3, 3'), wherein the sensor field comprises at least two sensor elements (5a, 5a', 5a", 5a‴, 5aʺʺ, 5n, 5n', 5n", 5n‴, 5nʺʺ) which are in each case adapted for measuring a temperature and which are arranged at different positions on the second surface of the substrate (3, 3'), and
arranging a levelling film (17ʺʺ, 17a‴ʺ, 17n‴ʺ), which is formed in multiple pieces, at least in some regions on the second surface of the substrate (3, 3").

12. The method according to Claim 11, wherein the arrangement (1030) of at least one sensor field comprises:
arranging the sensor field by means of screen printing, gravure printing, pad printing and/or by means of inkjet printing on the basis of an ink comprising metal particles made from gold, silver, platinum and/or a silver-palladium alloy, and/or
arranging the sensor field by means of vapour deposition of a metal layer onto the second surface and/or laser ablation of the metal layer, and/or
arranging the sensor field by means of an aerosol deposition method by depositing aerosols comprising metals, particularly noble metals.

13. The method according to Claim 11 or 12, wherein the arrangement (1030) of at least one sensor field comprises:
arranging at least one conductor track (7a, 7a'', 7n, 7n''), particularly a multiplicity of conductor tracks (7a, 7a", 7n, 7n"), for electrically contacting at least one of at least two sensor elements (5a, 5a', 5a", 5a‴, 5aʺʺ, 5n, 5n', 5n", 5nʺʺ), which are comprised by the sensor field, and/or
arranging at least one connection means, particularly at least one connection pad (9a, 9a', 9n, 9n') on the conductor track (7a, 7a", 7n, 7n").

## Revendications

1. Ensemble de capteurs, destiné à détecter un profil de températures dans l'espace, comportant :
au moins un substrat (3, 3''), pourvu d'une première surface et d'une deuxième surface opposée au moins par endroits à la première surface, le substrat (3, 3'') étant conçu au moins par endroits de forme souple ;
au moins un produit adhésif, le produit adhésif étant placé au moins par endroits sur la première surface et / ou sur la deuxième surface, destiné à apposer l'ensemble de capteurs sur au moins un organe de mesure (15‴) ; et
au moins un champ de capteurs,
le champ de capteurs comprenant au moins deux éléments capteurs (5a, 5a', 5a", 5a‴, 5aʺʺ, 5n, 5n' 5n", 5nʺʺ) dont chacun est adapté pour détecter une température, qui sont placés sur différentes positions sur la deuxième surface du substrat (3, 3"), **caractérisé en ce qu'**au moins un film de nivellement (17'''', 17a‴ʺ, 17n‴ʺ) conçu en plusieurs parties est placé au moins par endroits sur la deuxième surface du substrat (3, 3").

2. Ensemble de capteurs selon la revendication 1, au moins un élément capteur (5a, 5a', 5a'', 5a''', 5a'''', 5n, 5n', 5n'', 5n'''') sur la deuxième surface étant en contact électrique au moyen d'au moins une piste conductrice (7a, 7a", 7n, 7n'') sur la deuxième surface, et / ou
au moins un élément capteur (5a, 5a' 5a" 5a''', 5aʺʺ, 5n, 5n', 5nʺ, 5n'''') sur la deuxième surface étant en contact électrique au moyen d'au moins une piste conductrice (7a, 7a", 7n, 7n'') sur la première surface, au moins un point de contact de passage à travers le substrat (3, 3") connectant électriquement l'élément capteur (5a, 5a', 5a'', 5a''', 5aʺʺ, 5n, 5n', 5n", 5nʺʺ) sur la deuxième surface avec la piste conductrice (7a, 7a", 7n, 7n'') sur la première surface, notamment les éléments capteurs (5a, 5a', 5a", 5a‴, 5a'''', 5n, 5n', 5nʺ, 5n'''') étant conçus au moins par endroits en une piste conductrice (7a, 7a'', 7n, 7n'') centrale commune, qui est placée sur la première surface et / ou sur la deuxième surface.

3. Ensemble de capteurs selon la revendication 2, les éléments capteurs (5a, 5a', 5a'', 5a''', 5aʺʺ, 5n, 5n', 5n'', 5n'''') comprenant des éléments résistifs, notamment des lignes résistives en forme de méandres en une matière conductrice, notamment en platine, notamment les éléments résistifs étant imprimés et / ou déposés en phase vapeur sur la deuxième surface.

4. Ensemble de capteurs selon l'une quelconque des revendications 2 ou 3, au moins deux pistes conductrices (7a, 7a", 7n, 7n'') se croisant au moins par endroits, et au moins une couche isolante (8) étant placée entre les deux pistes conductrices (7a, 7a'', 7n, 7n"), dans une zone, dans laquelle les deux pistes conductrices (7a, 7a", 7n, 7n'') se croisent.

5. Ensemble de capteurs selon l'une quelconque des revendications 2 à 4, les pistes conductrices (7a, 7a", 7n, 7n") comportant chacune au moins un moyen de raccordement, notamment au moins un plot de raccordement (9a, 9a', 9n, 9n'), comprenant une matière argentée et / ou une matière cuivrée pour la mise en contact des éléments capteurs (5a, 5a', 5a", 5a‴, 5aʺʺ, 5n, 5n', 5n'', 5nʺʺ).

6. Ensemble de capteurs selon l'une quelconque des revendications précédentes, le substrat (3, 3") comprenant un film souple, notamment un film en polyimide.

7. Ensemble de capteurs selon l'une quelconque des revendications précédentes, le produit adhésif comprenant au moins un film collant (11a, 11a" 11b, 11n").

8. Ensemble de capteurs selon la revendication 1, comprenant :
au moins un film de couverture (19'''''), placé sur la deuxième surface du substrat (3, 3"), au moins par endroits dans des zones d'évidements du film de nivellement (17ʺʺ, 17a‴ʺ, 17n'''''), notamment placé sur le champ de capteurs, et / ou
au moins une matière d'enrobage (21'''''), notamment un composite siliconé, placé sur la deuxième surface du substrat (3, 3"), au moins par endroits dans des zones d'évidements du film de nivellement (17ʺʺ, 17a‴ʺ, 17n‴ʺ), notamment placé sur le champ de capteurs.

9. Utilisation d'un ensemble de capteurs (1, 1', 1'', 1''') selon l'une quelconque des revendications précédentes pour détecter un profil de températures dans l'espace sur un organe de mesure (15‴), notamment sur différentes cellules d'une batterie ou d'une pile à combustible.

10. Cellule galvanique, notamment une cellule de batterie ou une pile à combustible, pourvue d'au moins un ensemble de capteurs (1, 1', 1'', 1‴) selon l'une quelconque des revendications 1 à 8, placé sur la cellule galvanique.

11. Procédé, destiné à fabriquer un ensemble de capteurs destiné à détecter un profil de températures dans l'espace, comportant les étapes consistant à :
mettre à disposition (1010) au moins un substrat (3, 3") pourvu d'une première surface et d'une deuxième surface, opposée au moins par endroits à la première surface, le substrat (3, 3") étant conçu au moins par endroits de forme souple ;
placer (1020) au moins un produit adhésif, au moins par endroits sur la première et / ou sur la deuxième surface du substrat (3, 3"), pour apposer l'ensemble de capteurs sur au moins un organe de mesure (15''') ; et
placer (1030) au moins un champ de capteurs sur la deuxième surface du substrat (3, 3'), le champ de capteurs comprenant au moins deux éléments capteurs (5a, 5a', 5a", 5a''', 5a'''', 5n, 5n', 5n'', 5n‴, 5nʺʺ), dont chacun est adapté pour détecter une température, qui sont placés dans différentes positions sur la deuxième surface du substrat (3, 3'),
et
placer un film de nivellement (17ʺʺ, 17a‴ʺ, 17n''''') conçu en plusieurs parties, au moins par endroits sur la deuxième surface du substrat (3, 3").

12. Procédé selon la revendication 11, le placement (1030) d'au moins un champ de capteurs comportant :
le placement du champ de capteurs par sérigraphie, impression par gravure, impression au tampons et / ou par impression au jet d'encre sur la base d'une encre comprenant des particules métalliques d'or, d'argent, de platine et / ou d'un alliage argent / palladium et / ou
le placement du champ de capteurs par dépôt en phase vapeur d'une couche métallique sur la deuxième surface et / ou ablation au laser de la couche métallique, et / ou
le placement du champ de capteurs par procédé de dépôt d'aérosol, en déposant des aérosols comprenant des métaux, notamment des métaux précieux.

13. Procédé selon la revendication 11 ou 12, le placement (1030) d'au moins un champ de capteurs comportant :
le placement d'au moins une piste conductrice (7a, 7a'', 7n, 7n''), notamment d'une pluralité de pistes conductrices (7a, 7a'', 7n, 7n"), pour la mise en contact électrique d'au moins un parmi au moins deux éléments capteurs (5a, 5a', 5a'', 5a''', 5aʺʺ, 5n, 5n', 5nʺ, 5nʺʺ) qui sont compris par le champ de capteurs, et / ou
le placement d'au moins un moyen de raccordement, notamment d'au moins un plot de raccordement (9a, 9a',9n, 9n') sur la piste conductrice (7a, 7a'', 7n, 7n").
